# EUROPEAN PATENT APPLICATION

(11) **EP 3 578 386 A1**
(43) Date of publication of application: **11.12.2019**
(21) Application number: 18183776.6
(22) Date of filing: 16.07.2018
(51) Int. Cl.: B60B 5/02, B60B 3/10

(54) **HEAT DISSIPATION STRUCTURE FOR COMPOSITE MATERIAL WHEEL RIM**

(30) Priority: 05.06.2018 TW 107119303
(71) Applicant: Compositegear Taiwan Co., Ltd., New Taipei City (TW)
(72) Inventor: Chen, Jerry Han-Chieh, New Taipei City (TW)
(74) Representative: Cabinet Chaillot

(57) **Abstract**

A heat dissipation structure of composite material wheel rim (2) is mainly that a spoke (21) of the composite material wheel rim (2) configures a plurality of heat dissipation slots (25) on an inner surface (211) facing toward configuration end of the brake caliper (24). By disposing the heat dissipation slot (25), a heat dissipation area between the wheel rim (2) and air can be increased, and it is taken as heat dissipation air passage. Peripheral high temperature environment caused by effect of the brake caliper (24) and the brake disc (23) can be rapidly eliminated when a vehicle is stopped.

## Description

### BACKGROUND OF THE INVENTION

### Field of the Invention

The present invention relates to a heat dissipation structure for composite material wheel rim, and more particularly to a plurality of heat dissipation slots that is configured at an inner surface of the wheel rim facing toward a brake caliper. By disposing the heat dissipation slot, an heat dissipation area between the wheel rim and air can be increased, and it is taken as heat dissipation air passage, and peripheral high temperature environment caused by the brake caliper can be rapidly eliminated when a vehicle is stopped, thereby increasing service life of elements.

### Description of the Related Art

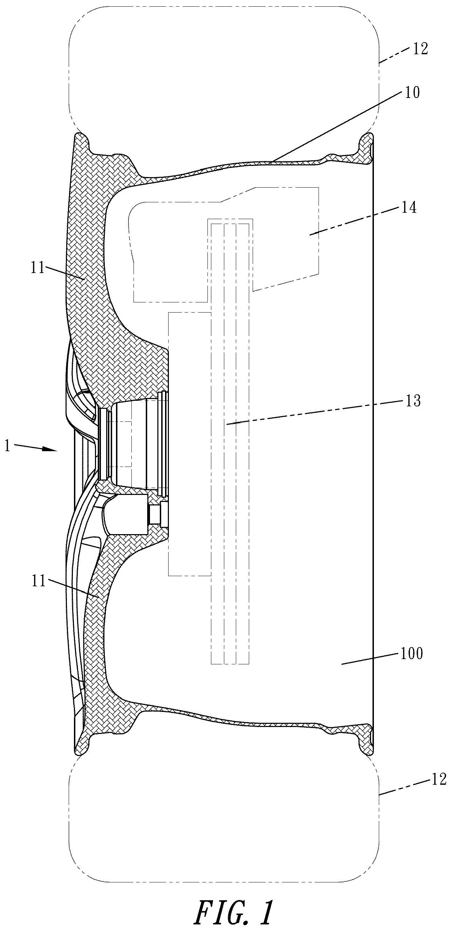

A structure of a conventional vehicle wheel rim 1 as shown in Fig. 1 is generally composed of a wheel rim 10 circularly disposed, and a plurality of spokes 11 located at a side of the wheel rim 10 to connect and support an inner surface of the wheel rim 10, wherein an external circumference of the wheel rim 10 is used for fastening a tire 12. A frame inner portion 10 of the wheel rim 10 is used for configuring a brake disc 13 and a brake caliper 14 for stopping the vehicle. The disposition locations of the brake caliper 14, the brake disc 13 and the wheel rim 1 are so close. While instantly stopping or continuously stopping the vehicle, peripheral environment would generate high temperature. Such high temperature may affect functionality and service life of peripheral elements. If the wheel rim 1 is made of metal, metal has fast heat conduction to support heat dissipation. However, once the wheel rim 1 is made of composite material, high temperature caused by the brake may not be easily eliminated due to the composite material having worse heat conduction. Consequently, functionality and service life of peripheral elements will be influenced.

### SUMMARY OF THE INVENTION

In view of the aforementioned drawbacks of application from the composite material wheel rim, the inventor of the present invention conducted researches and experiments, and finally developed a composite material wheel rim capable of quickly eliminating high temperature caused by a surrounding environment and dissipating heat when the brake caliper and a brake disc are rapidly or continuously used.

Therefore, a primary characteristic of the present invention is to configure a plurality of heat dissipation slots in the inner surface of the spoke of the composite material wheel rim facing toward the configuration end of the brake caliper. By disposing the heat dissipation slot, the heat dissipation area being in contact with air and the heat dissipation air passage can be increased. Accordingly, peripheral high temperature environment caused by the brake caliper and the brake disc can be rapidly eliminated when a vehicle is stopped.

The heat dissipation structure of composite material wheel rim of the present invention comprises a wheel rim disposed in hollow and at a circle shape and a plurality of spokes. An inside of the wheel rim has a frame inner portion. The spoke is located at a side of the frame inner portion and extending in a radial shape where external ends of the spoke are connected to the wheel rim. A plurality of heat dissipation slots are configured on a surface of the spoke facing toward the frame inner portion.

Preferably, the spoke takes a center of the wheel rim as a center of a circle to perform configuration of concentric circles with different radius for the heat dissipation slot so that the heat dissipation slots having the same radius disposed on each of the spokes encircle into a circle spaced at intervals; wherein an intersection between a side wall radially extended from the spoke and the heat dissipation slots that is a recess shape is opened.

Preferably, each of the spokes has a central hole separated from an axial position corresponding to the wheel rim.

### BRIEF DESCRIPTION OF THE DRAWINGS

Fig. 1 is a cross-sectional drawing of a conventional vehicle wheel rim;
Fig. 2 is a three-dimensional drawing according to the embodiment of the present invention;
Fig. 3 is a three-dimensional drawing of another angle according to the embodiment of the present invention;
Fig. 4 is a planar graph in A direction according to Fig. 3;
Fig. 5 is a cross-sectional drawing according to the embodiment of the present invention;

### DETAILED DESCRIPTION OF THE PREFERRED EMBODIMENTS

The technical characteristics, contents, advantages and effects of the present invention will be apparent with the detailed description of a preferred embodiment accompanied with related drawings as follows.

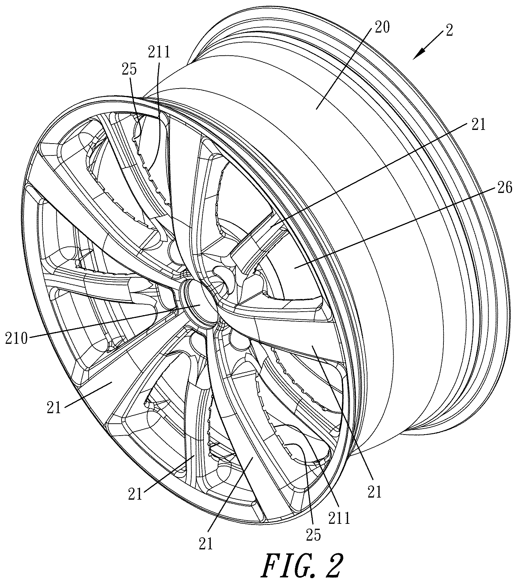

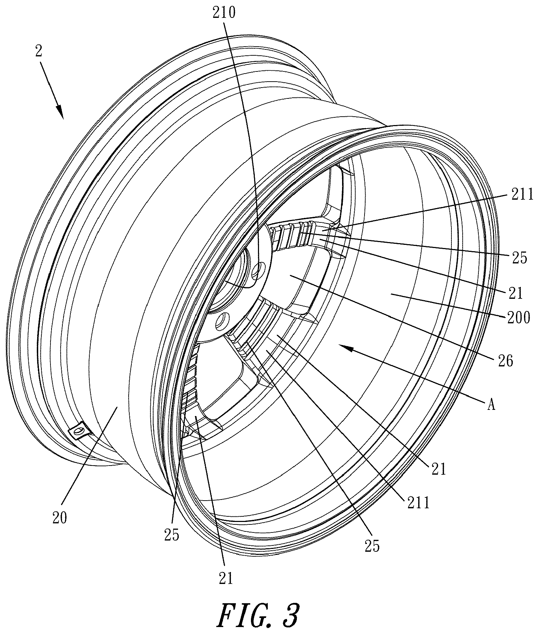

With reference to Figs. 2-5 for a composite material wheel rim 2 according to an embodiment of the invention comprises a wheel frame 20 circularly disposed in a hollow shape, and a plurality of spokes 21, wherein an external circumference surface of the wheel frame 20 is used for fastening a tires where an inside has a frame inner portion 200.

The spoke 21 locates at a side of the frame inner portion 200, and a central hole 210 is separated from an axial position corresponding to the wheel rim 2. A peripheral edge of the central hole 210 of the spoke 21 is outwardly extended in radiation shape, wherein an external end is connected to an inner side wall of the wheel rim 20 to support the wheel frame 20.

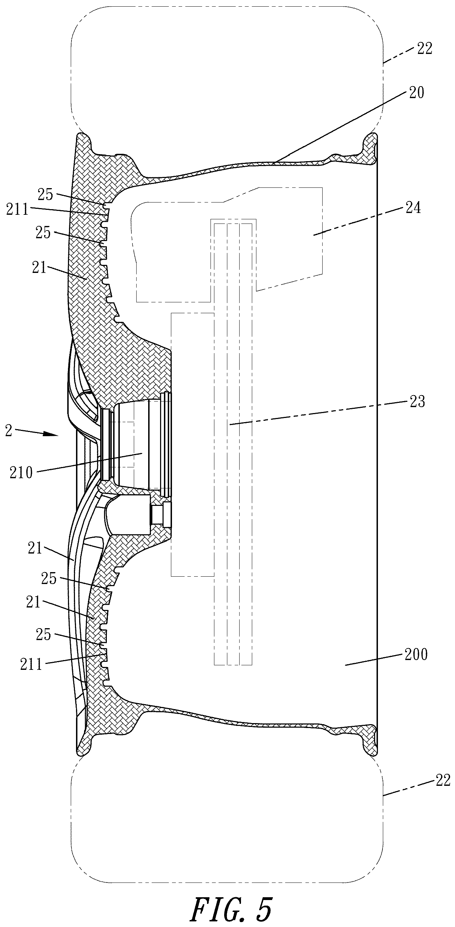

The inner frame portion 200 as shown in Fig. 5 is configured with a rake disc 23 and a brake caliper 24 for generating braking effect together with the brake disc 23.

The spoke 21 facing toward a surface 211 of the frame inner portion 200 is configured with a plurality of heat dissipation slots 25. The heat dissipation slot 25 is a recess shape, and an intersection between a side wall radially extended from the spoke 21 and the slots is opened. By disposing the heat dissipation slot 25, heat dissipation area being in contact with air can be increased due to disposition of the recess surface. Moreover, the heat dissipation slot 25 can be taken as heat dissipation air passage. When a vehicle is stopped, surrounding high temperature caused by the brake caliper 24 and the brake disc 23 can be rapidly eliminated by intervals 26 between the heat dissipation air passage of the heat dissipation slot 25 and adjacent spokes 21.

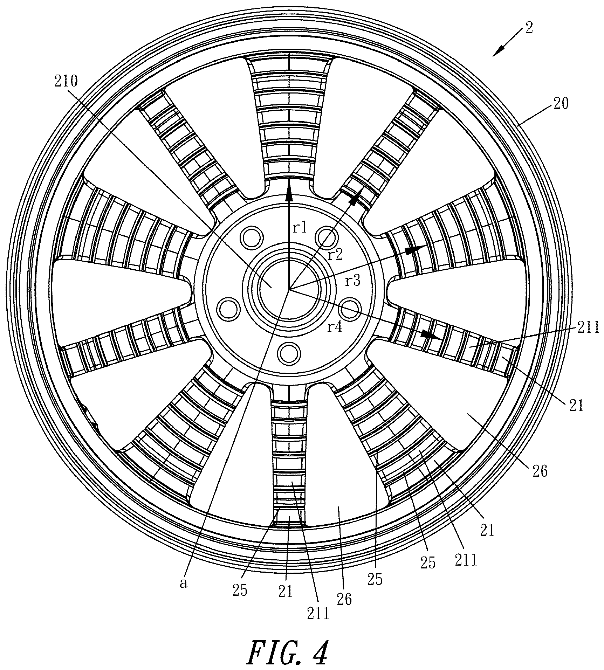

The configuration of the heat dissipation slots 25 takes the central hole 210 (or the center of the wheel frame 20) as the center of a circle a preferably shown in Fig. 4 expect configuration of different shapes, and configuration of concentric circles with different radius (r1, r2, r3, r4 and etc. as shown in Fig. 4) is performed on the spoke 21 so that the heat dissipation slots 25 having the same radius disposed on the different spokes 21 encircle into circles spaced at intervals. The rotation directions of the plurality of heat dissipation slots 25 arranged as circles and the wheel rim 2 are the same to allow hot air flowing along the air passage composed of the heat dissipation slots 25, thereby rapidly and smoothly exhausting.

Accordingly, the present invention, by configuring a plurality of heat dissipation slots 25 on ends of the spokes 21 facing toward the frame inner portion 200, can improve usage shortcoming caused from worse heat conduction on conventional composite material wheel rim so as to have industrial applicability.

While the present invention has been described by means of specific embodiments, numerous modifications and variations could be made thereto by those skilled in the art without departing from the scope and spirit of the invention set forth in the claims.

## Claims

1. A heat dissipation structure of composite material wheel rim (2) comprising a wheel rim (20) disposed in hollow and at a circle shape and a plurality of spokes (21), wherein an inside of the wheel rim (20) has a frame inner portion (200), the spoke (21) located at a side of the frame inner portion (200) and extending in a radial shape where external ends of the spoke (21) connected to the wheel rim (20), **characterized in that**: a plurality of heat dissipation slots (25) configured on a surface of the spoke (21) facing toward the frame inner portion (200).

2. The heat dissipation structure of composite material wheel rim (2) of claim 1, wherein the spoke (21) takes a center of the wheel rim (20) as a center of a circle (a) to perform configuration of concentric circles with different radius (r1, r2, r3, r4) for the heat dissipation slot (25) so that the heat dissipation slots (25) having the same radius disposed on each of the spokes (21) encircle into a circle spaced at intervals; wherein an intersection between a side wall radially extended from the spoke (21) and the heat dissipation slots (25) that is a recess shape is opened.

3. The heat dissipation structure of composite material wheel rim (2) of claim 2, wherein each of the spokes (21) has a central hole (210) separated from an axial position corresponding to the wheel rim (2).
